(19) **Europäisches Patentamt**
**European Patent Office**
**Office européen des brevets**

(11) **EP 3 094 677 B1**

(12) **FASCICULE DE BREVET EUROPEEN**

(45) Date de publication et mention
de la délivrance du brevet:
**15.07.2020 Bulletin 2020/29**

(51) Int Cl.:
*C08L 95/00* (2006.01)          *C08K 3/34* (2006.01)
*C10C 3/14* (2006.01)

(21) Numéro de dépôt: **15704044.5**

(22) Date de dépôt: **13.01.2015**

(86) Numéro de dépôt international:
**PCT/FR2015/050074**

(87) Numéro de publication internationale:
**WO 2015/104518 (16.07.2015 Gazette 2015/28)**

(54) **BITUME SOLIDE ET SON PROCEDE D'OBTENTION**

FESTBITUMEN UND VERFAHREN ZUR HERSTELLUNG DAVON

SOLID BITUMEN AND METHOD FOR THE PRODUCTION THEREOF

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.01.2014 FR 1450249**

(43) Date de publication de la demande:
**23.11.2016 Bulletin 2016/47**

(73) Titulaires:
• **Total Marketing Services
92800 Puteaux (FR)**
• **Centre National de la Recherche Scientifique
(C.N.R.S.)
75016 Paris (FR)**

(72) Inventeurs:
• **MARIOTTI, Sophie
F-69005 Lyon (FR)**
• **NEUVILLE, Mathieu
F-69006 Lyon (FR)**
• **BACKOV, Rénal
F-33200 Bordeaux-Cauderan (FR)**
• **SCHMITT, Véronique
F-33400 Talence (FR)**
• **ANACLET, Pauline
F-33400 Talence (FR)**

(74) Mandataire: **Corizzi, Valérie et al
PACT-IP
37, rue Royale
92210 Saint-Cloud (FR)**

(56) Documents cités:
**US-A- 1 398 201     US-A- 5 362 314**

Remarques:
Le dossier contient des informations techniques présentées postérieurement au dépôt de la demande et ne figurant pas dans le présent fascicule.

EP 3 094 677 B1

**Description**

**DOMAINE DE L'INVENTION**

La présente invention se situe dans le domaine technique des bitumes. Plus précisément, l'invention concerne un procédé d'obtention de bitume solide et le matériau ainsi obtenu.

**ARRIERE-PLAN TECHNOLOGIQUE**

Le bitume est un matériau utilisé en très grandes quantités comme matériau de construction. Associé à des granulats, des fines ou des armatures, le bitume sert par exemple à la fabrication des chaussées routières et des chapes d'étanchéité sur les toitures ou dans des bassins de rétention. Le bitume se présente généralement sous la forme d'un matériau noir ayant une forte viscosité, voire solide à température ambiante, et qui se fluidifie en chauffant. Le transport du bitume est considéré comme risqué et il est très encadré d'un point de vue réglementaire. Il s'effectue classiquement en vrac à chaud, par exemple dans des camions-citernes. Ce mode de transport ne présente pas de difficultés particulières lorsque les équipements et les infrastructures de transport sont en bon état. Dans le cas contraire, le transport de bitume chaud sous forme liquide par camions-citernes peut devenir problématique : si le camion-citerne n'est pas régulé en température, le bitume pourra se viscosifier durant un trajet trop long. Les distances de livraison du bitume sont donc limitées.

Pour résoudre ce problème, il a été envisagé de disperser le bitume sous forme d'une émulsion dont la viscosité est inférieure à celle du bitume. Mais cette mise en émulsion implique une teneur en eau élevée qui n'est pas intéressante pour le transport. Il est difficile de concentrer le bitume dans les émulsions au-delà de 80%.

Il a été aussi envisagé dans l'art antérieur de produire un bitume sous forme solide pour ne pas avoir à transporter d'eau. Le brevet américain US 5 637 350 décrit un bitume sous la forme de pépites dans lesquelles le bitume est encapsulé dans une coquille imperméable et insoluble dans l'eau. Ces pépites de bitume sont obtenues en vaporisant le bitume à l'état fondu pour former des gouttes, puis en enrobant ces gouttes avec un enrobage imperméable et insoluble dans l'eau. On peut citer également le brevet américain US 8 404 164 décrivant une composition de bitume sous forme de pellets solides. Ces pellets de bitume sont obtenus en mélangeant le bitume liquide avec un composé épaississant puis un composé durcissant avec passage dans un granulateur. Une fois sous forme solide, le bitume peut avantageusement être transporté à température ambiante sans précautions particulières, par exemple dans des sacs.

Une difficulté supplémentaire réside dans le fait que l'on souhaite pouvoir transporter le bitume sous forme solide même lorsque la température extérieure est très élevée. Avantageusement, le bitume solide doit posséder les propriétés suivantes :

- Le matériau de bitume solide est de préférence stable thermiquement, en particulier à des températures élevées, et avantageusement jusqu'à une température inférieure à 100°C. De préférence, le matériau de bitume solide ne colle pas et possède avantageusement une bonne aptitude à l'écoulement, ce qui facilite sa manipulation pour son chargement et/ou déchargement, lors de son transport, son stockage et/ou son utilisation.
- Le matériau de bitume solide est de préférence facilement relargable sous forme liquide aux températures d'utilisation dudit matériau. On entend par «température d'utilisation» des températures comprises entre 100°C et 180°C, de préférence entre 120°C à 160°C, plus préférentiellement entre 140°C et 160°C. Le matériau de bitume solide peut ainsi, une fois transporté, retrouver par chauffage une forme liquide adaptée à son utilisation.

La présente invention a pour objectif de fournir un matériau de bitume solide répondant à ces attentes.

Par ailleurs, il a été décrit dans la demande de brevet américaine US 2012/0128747 un matériau sous la forme de particules solides constituées d'une enveloppe continue comprenant de l'oxyde de silicium renfermant un cœur comprenant au moins une huile cristallisable ayant un point de fusion inférieur à 100°C. Ces particules sont conçues pour permettre l'encapsulation d'une ou de plusieurs molécules d'intérêt et leur libération contrôlée.

**BREVE DESCRIPTION DE L'INVENTION**

La présente invention a pour objet un procédé d'obtention d'un matériau de bitume solide, ce procédé comprenant les étapes consistant à :

a) préparer une émulsion de gouttes de bitume dans une phase aqueuse, ladite émulsion étant stabilisée par un mélange d'au moins deux types de particules solides, un premier type de particules solides ayant un diamètre compris entre 30 nm et 3000 nm, de façon préférée entre 40 nm et 1000 nm, de façon plus préférée entre 40 nm et 500 nm, et de façon encore plus préférée entre 50 nm et 300 nm, et un second type de particules solides ayant un diamètre compris entre 2 nm et 100 nm, de façon préférée entre 2 nm et 50 nm, de façon plus préférée entre 2 nm et 20 nm, et de façon encore plus préférée entre 4 nm et 9 nm, étant entendu que le premier type de particules solides a un diamètre au moins trois fois plus élevé que celui du second type de particules solides, de façon préférée au moins quatre fois plus élevé, et de façon plus préférée au moins six fois plus élevé ;

b) éventuellement, former une coque autour des gouttes de bitume obtenues à l'étape (a) par réaction d'un précurseur d'oxyde de silicium en milieu aqueux acide ;

c) sécher jusqu'à l'obtention d'un matériau de bitume solide.

Dans la présente invention, le terme « solide » désigne au niveau macroscopique la qualité d'un matériau ayant une forme et un volume propre, incluant notamment les poudres, les galettes ou pâtes granulaires.

On entend par « matériau de bitume solide », un matériau ayant une forme et un volume propre à température ambiante, par opposition avec un matériau de bitume classiquement visqueux à température ambiante, étant entendu que le matériau solide peut néanmoins contenir de l'eau. Par matériau de bitume solide, on entend par exemple les poudres, les galettes ou pâtes granulaires de bitume.

Les inventeurs ont découvert que le matériau de bitume solide obtenu par le procédé selon l'invention constituait un matériau de bitume solide particulièrement intéressant, car facilement manipulable et transportable par exemple dans des sacs, mais qui pouvait cependant être facilement relargué sous forme liquide à des températures classiques d'utilisation.

En outre, le matériau de bitume solide selon l'invention, en particulier sous forme de poudre, est avantageusement stable thermiquement, même à des températures très élevées.

La présente invention a également pour objet le matériau de bitume solide ainsi obtenu ou susceptible de l'être. Il s'agit de préférence d'une poudre de bitume. Il s'agit d'un matériau de bitume solide comprenant des particules formées d'un cœur comprenant du bitume et d'une enveloppe ou d'une coque, ladite enveloppe ou coque comprenant au moins deux types de particules solides, un premier type de particules solides ayant un diamètre compris entre 30 nm et 3000 nm, de façon préférée entre 40 nm et 1000 nm, de façon plus préférée entre 40 nm et 500 nm, et de façon encore plus préférée entre 50 nm et 300 nm, et un second type de particules solides ayant un diamètre compris entre 2 nm et 100 nm, de façon préférée entre 2 nm et 50 nm, de façon plus préférée entre 2 nm et 20 nm, et de façon encore plus préférée entre 4 nm et 9 nm, étant entendu que le premier type de particules a un diamètre au moins trois fois plus élevé que celui du second type de particules, de façon préférée au moins quatre fois plus élevé, et de façon plus préférée au moins six fois plus élevé.

## BREVE DESCRIPTION DES FIGURES

La **figure 1** est une photographie de la poudre de bitume obtenue selon l'exemple 2.

La **figure 2** est une image au microscope électronique à balayage d'une particule de la poudre de bitume de la figure 1.

La **figure 3** est une photographie d'une galette de bitume obtenue selon l'exemple 3.

## DESCRIPTION DETAILLEE DE L'INVENTION

Il est entendu que, dans le contexte de cette description, le terme « compris entre » doit être interprété comme incluant les bornes indiquées.

En outre, sauf mention contraire, le terme « diamètre » désigne pour les particules le diamètre moyen en surface

$$D = \frac{\sum_{i=1}^{n} Di^3}{\sum_{i=i}^{n} Di^2}$$

(c'est-à-dire la moyenne des diamètres pondérés par les surfaces : où $D_i$ est le diamètre de la particule i et la somme s'effectue sur les n particules composant l'échantillon). Ce diamètre est aussi appelé surface spécifique par le fournisseur quand il s'agit de particules commerciales. Le diamètre moyen des particules peut être mesuré selon les méthodes classiques connues de l'homme du métier, par exemple par granulométrie laser.

Le procédé objet de la présente invention permet de préparer un matériau de bitume solide. Ce procédé comprend au moins les étapes (a) et (c), et éventuellement l'étape intermédiaire (b) entre les étapes (a) et (c).

Lors de l'étape (a) du procédé selon l'invention, on prépare une émulsion de gouttes de bitume dans une phase aqueuse.

Le bitume est un produit lourd pouvant être issu de différentes origines. Dans la présente invention, l'expression « bitume » comprend les bitumes d'origine naturelle, les bitumes synthétiques et les bitumes modifiés, ainsi que leurs mélanges. Parmi les bitumes d'origine naturelle, on peut citer ceux contenus dans des gisements de bitume naturel, d'asphalte naturel ou les sables bitumineux. Les bitumes synthétiques peuvent être sélectionnés parmi les bitumes provenant du raffinage du pétrole brut, par exemple lors de la distillation atmosphérique et/ou sous vide du pétrole. Ces bitumes peuvent éventuellement être soufflés, viscoréduits et/ou désasphaltés. Les bitumes synthétiques peuvent également être obtenus en mélangeant différents effluents de raffinage comme les produits de désasphaltage, les résidus de viscoréduction, les produits de soufflage et/ou de l'asphalte naturel, en les associant éventuellement avec les résidus de distillation ci-avant. Les bitumes peuvent être des bitumes de grade dur ou de grade mou. Il est en outre connu de modifier le bitume (ou le mélange de bitumes) en y mélangeant au moins un composé en vue d'améliorer certaines de ses performances mécaniques et thermiques. Les bitumes modifiés peuvent être des bitumes fluxés par addition de solvants volatils, de fluxants d'origine pétrolière et/ou de fluxants d'origine végétale. Classiquement, les fluxants utilisés peuvent comprendre des acides gras en $C_6$ à $C_{24}$ sous forme acide, ester ou amide en combinaison avec une coupe hydrocarbonée. Les bitumes modifiés peuvent également être des mélanges bitume/polymère. A titre d'exemples de polymères pour bitume, on peut citer les élastomères tels que les copolymères SB (copolymère à blocs du styrène et du butadiène), SBS (copolymère à blocs styrène-butadiène-styrène), SIS (copolymère styrène-isoprène-styrène), SBS* (copolymère à blocs styrène-butadiène-styrène en étoile), SBR (copolymère styrène-butadiène-rubber), EPDM (copolymère éthylène-propylène-diène modifié), polychloroprène, polynorbornène et éventuellement les polyoléfines tels que les polyéthylènes PE (polyéthylène), PP (polypropylène), les plastomères tels que les EVA (copolymère polyéthylène-acétate de vinyle), EMA (copolymère polyéthylène-acrylate de méthyle), les copolymères d'oléfines et d'esters carboxyliques insaturés tels que d'EBA (copolymère polyéthylène-acrylate de butyle), les copolymères polyoléfines élastomères, les polyoléfines du type polybutène, les copolymères de l'éthylène et d'esters de l'acide acrylique, méthacrylique ou de l'anhydride maléique, les copolymères et terpolymères d'éthylène et de méthacrylate de glycidyle les copolymères éthylène-propylène, les caoutchoucs, les polyisobutylènes, les SEBS (copolymère du styrène, de l'éthylène, du butylène et du styrène), les ABS (acrylonitrile-butadiène-styrène). D'autres additifs peuvent être ajoutés afin de modifier les caractéristiques mécaniques d'un bitume. Il s'agit par exemple d'agents de vulcanisation et/ou d'agents de réticulation susceptibles de réagir avec un polymère, lorsqu'il s'agit d'un élastomère et/ou d'un plastomère, pouvant être fonctionnalisés et/ou pouvant comporter des sites réactifs.

Parmi les agents de vulcanisation, on peut citer ceux à base de soufre et ses dérivés, utilisés pour réticuler un élastomère à des teneurs de 0,01% à 30% par rapport au poids d'élastomère. Parmi les agents de réticulation, on peut citer les agents de réticulation cationiques tels que les mono ou poly acides, ou anhydride carboxyliques, les esters d'acides carboxyliques, les acides sulfoniques, sulfurique, phosphoriques, voire les chlorures d'acides, les phénols, à des teneurs de 0,01% à 30% par rapport au polymère.

Ces agents sont susceptibles de réagir avec l'élastomère et/ou le plastomère fonctionnalisé. Ils peuvent être utilisés en complément ou en remplacement des agents de vulcanisation. Parmi les additifs susceptibles d'être utilisés, on citera les additifs d'adhésivité connus de l'homme du métier tels que des amines ou polyamines. On citera également les siccatifs susceptibles d'assurer la montée en cohésion dans le temps du liant fluxé.

La préparation d'une émulsion d'une phase lipophile, par exemple de bitume, dans une phase aqueuse stabilisée par des particules solides a déjà été décrite dans l'art antérieur. Ce type d'émulsion est couramment appelé « émulsion Pickering ». Par exemple, la demande de brevet FR 2 852 964 décrit la préparation d'une émulsion de bitume à l'aide d'un matériau minéral solide ayant une taille de particules allant de 10 nm à 5 μm.

Dans la présente invention, l'émulsion est stabilisée par un mélange d'au moins deux types de particules solides.

Les particules solides peuvent être minérales ou organiques, de préférence minérales. Parmi les particules minérales, les particules solides sont de préférence choisies dans le groupe constitué par les particules d'oxydes, les particules d'hydroxydes et les particules de sulfates de silicium ou de métaux. Plus préférentiellement, les particules solides sont choisies dans le groupe constitué par les particules d'oxyde de silicium, de titane, de zirconium et de fer, leurs sels tels que les silicates et les particules de carbone. Parmi les particules organiques, on peut citer notamment les particules polymériques, par exemple des particules de latex ou de cellulose. Les particules de différents types peuvent être constituées par le même matériau ou non. Avantageusement, l'émulsion peut être stabilisée par un mélange d'au moins deux types de particules de silice.

Le premier type de particules solides stabilisant l'émulsion a un diamètre compris entre 30 nm et 3000 nm, de façon préférée entre 40 nm et 1000 nm, de façon plus préférée entre 40 nm et 500 nm, et de façon encore plus préférée entre 50 nm et 300 nm.

Le second type de particules solides stabilisant l'émulsion a un diamètre compris entre 2 nm et 100 nm, de façon préférée entre 2 nm et 50 nm, de façon plus préférée entre 2 nm et 20 nm, et de façon encore plus préférée entre 4 nm et 9 nm.

Avantageusement, le premier type de particules solides stabilisant l'émulsion a un diamètre compris entre 30 nm et 3000 nm et le second de type de particules solides a un diamètre compris entre 2 nm et 20 nm.

Selon une variante préférée, le premier type de particules solides stabilisant l'émulsion a un diamètre compris entre 30 nm et 3000 nm et le second de type de particules solides un diamètre compris entre 4 nm et 9 nm.

Le diamètre des particules du premier type et du second type est choisi de sorte que le premier type de particules ait un diamètre au moins trois fois plus élevé que celui du second type de particules, de façon préférée au moins quatre fois plus élevé, et de façon plus préférée au moins six fois plus élevé.

Des particules de silice de différents diamètres sont commercialisées par la société Evonik-Degussa sous le nom commercial Aerosil®. Plusieurs grades sont proposés. Par exemple, les particules Aerosil® OX50 sont des particules de silice ayant un diamètre de 50 nm et les particules Aerosil® A380 sont des particules de silice ayant un diamètre de 7 nm.

Dans le procédé selon l'invention, l'émulsion peut être préparée avec une quantité totale de particules solides comprise entre 0,1% et 20% en poids, plus préférentiellement entre 2% et 11% en poids, et encore plus préférentiellement entre 4,5% et 8% en poids, par rapport au poids total de l'émulsion obtenue.

La quantité totale de particules solides du premier type est préférentiellement comprise entre 0,09% et 15% en poids, plus préférentiellement entre 1,5% et 7% en poids, et encore plus préférentiellement entre 3,5% et 5% en poids, par rapport au poids total de l'émulsion obtenue.

La quantité totale de particules solides du second type est préférentiellement comprise entre 0,01% et 5% en poids, plus préférentiellement entre 0,5% et 4% en poids, et encore plus préférentiellement entre 1% et 3% en poids, par rapport au poids total de l'émulsion obtenue.

Le rapport massique entre le premier type de particules solides et le second type de particules solides est de préférence compris entre 1 et 15, plus préférentiellement entre 2 et 10, et encore plus préférentiellement entre 3 et 6.

Les particules solides du premier type, du second type ou des deux peuvent avantageusement avoir une surface favorisant leur adsorption à l'interface entre la phase aqueuse et le bitume. Il est possible d'utiliser des particules solides ayant naturellement une surface de caractère amphiphile. Il est également possible, selon un mode de réalisation préféré de l'invention, d'utiliser des particules solides fonctionnalisées en surface pour favoriser leur adsorption à l'interface formée entre la phase aqueuse et le bitume.

Selon un mode de réalisation, les particules solides peuvent être fonctionnalisées par des groupements chimiques greffés de façon covalente en surface. Ces particules sont de préférence pré-fonctionnalisées avant leur utilisation dans le procédé selon l'invention. La fonctionnalisation peut être réalisée par des composés comportant des groupements hydrophobes, ces composés pouvant par exemple être choisis parmi les trialkoxysilane de formule $R-Si-(OR')_3$, dans laquelle R est un alkyle linéaire ou ramifié en $C_1$ à $C_{12}$, en particulier de $C_2$ à $C_{10}$, tout particulièrement n-octyle, portant éventuellement un groupe amino, et R', identique ou différent de R, est un groupe alkyle linéaire ou ramifié en $C_1$ à $C_{12}$, en particulier en $C_1$ à $C_6$, et tout particulièrement éthyle.

Selon un autre mode de réalisation, les particules solides peuvent être fonctionnalisées par des composés tensioactifs adsorbés à leur surface. Les composés tensioactifs possèdent une partie hydrophile et une partie hydrophobe. La partie hydrophile des composés tensioactifs est adsorbée à la surface des particules, laissant libre la partie hydrophobe. Les composés tensioactifs utilisables pour fonctionnaliser les particules selon l'invention peuvent être des tensioactifs non-ioniques, cationiques ou anioniques, de préférence cationiques ou anioniques. Les composés tensioactifs peuvent avantageusement comprendre au moins une chaîne alkyle en $C_{12}$ à $C_{32}$, de plus préférentiellement en $C_{16}$ à $C_{20}$, et encore plus préférentiellement en $C_{18}$. Les composés tensioactifs peuvent être choisis dans le groupe constitué par :

- les alkylsulfates de sodium, par exemple le dodécylsulfate de sodium (SDS) ;
- les bromures d'alkyltriméthylammonium, par exemple le bromure de cétyl-triméthyl-ammonium (CTAB) et le bromure de tétradécyl-triméthyl-ammonium (TTAB) ;
- les alkyl-imidazoline-amines
- et leurs mélanges.

De préférence, la quantité de tensioactif qui peut être utilisée dans le procédé selon l'invention est inférieure à celle nécessaire pour constituer une monocouche de tensioactifs à la surface des particules solides. Le taux de recouvrement des particules est, avantageusement, compris entre 40% et 60% de manière à conférer aux particules un caractère amphiphile. La quantité de tensioactif résiduelle dans la phase continue de l'émulsion est de préférence inférieure à la quantité nécessaire pour stabiliser l'émulsion de bitume sans les particules. De préférence, la quantité de tensioactif utilisé pour la fonctionnalisation des particules solides est comprise entre 1/200 et 1/3 de la concentration micellaire critique. La concentration micellaire critique peut être déterminée expérimentalement selon tout procédé connu, notamment comme décrit dans l'ouvrage de référence « The Colloidal Domain: Where Physics, Chemistry, Biology, and Technology Meet », 2nd édition, D. Fennell Evans, Hâkan Wennerström. A titre d'exemple non limitatif, la concentration massique du composé tensioactif est comprise entre $10^{-4}$% et 0,5%, de façon préférée entre $10^{-4}$% et $10^{-1}$%, et de façon plus préférée entre $10^{-4}$% à $10^{-2}$%, le pourcentage étant calculé par rapport à la masse totale de l'émulsion.

La fonctionnalisation des particules solides par des composés tensioactifs adsorbés à leur surface peut être réalisée avant l'utilisation de ces particules dans le procédé selon l'invention ou bien in-situ, c'est-à-dire que la fonctionnalisation des particules avec un composé tensioactif est réalisée à l'étape (a), en même temps que la préparation de l'émulsion de gouttes de bitume selon l'invention.

Dans le procédé selon l'invention, l'étape (a) qui consiste à préparer une émulsion de gouttes de bitume stabilisée dans une phase aqueuse peut être réalisée en émulsifiant à l'aide d'une agitation mécanique un mélange aqueux comprenant les particules solides et le bitume. Les dispositifs d'agitation mécanique bien connus de l'homme du métier, tel que l'Ultra-Turrax®, peuvent être utilisés. Le bitume peut être préalablement chauffé pour diminuer sa viscosité, de préférence à une température comprise entre 100°C et 180°C, de façon préférée entre 120°C et 160°C, et de façon plus préférée entre 140°C et 160°C. Un mélange aqueux comprenant les particules solides et le bitume peut être obtenu en versant le bitume chaud dans une dispersion aqueuse contenant tout ou partie des particules solides. De préférence, la dispersion aqueuse est préalablement chauffée à une température comprise entre 30°C et 95°C pour éviter que le bitume liquide ne se solidifie immédiatement au contact de la dispersion aqueuse.

Les inventeurs ont constaté que la présence de deux types de particules solides comme décrit ci-dessus rendait possible la formation d'une émulsion stable de gouttes de bitume. L'utilisation uniquement de particules solides de petite taille ne permet pas de former d'émulsion stable : les inventeurs émettent l'hypothèse que les particules de petite taille s'incorporeraient dans le bitume et ne formeraient pas une enveloppe. A l'inverse, l'émulsion obtenue avec seulement des particules de plus grande taille ne présente pas une stabilité suffisante.

Selon un premier mode de réalisation, l'étape (a) du procédé selon l'invention de préparation d'une émulsion de gouttes de bitume stabilisée dans une phase aqueuse, peut consister à :

- préparer une première dispersion colloïdale avec le premier type de particules solides, de préférence de silice, dans un milieu aqueux en présence d'au moins un composé tensioactif ;
- chauffer ladite dispersion colloïdale à une température comprise entre 30°C et 95°C ;
- verser le bitume, de préférence chauffé à une température comprise entre 100°C et 180°C, de façon préférée entre 120°C et 160°C, et de façon plus préférée entre 140°C et 160°C, dans la dispersion colloïdale chaude et agiter le mélange pour provoquer l'émulsification ;
- préparer une seconde dispersion colloïdale avec le second type de particules solides, de préférence de silice, dans un milieu aqueux en présence d'au moins un composé tensioactif ;
- mélanger l'émulsion de bitume obtenue dans la première dispersion colloïdale avec la seconde dispersion colloïdale et agiter le mélange.

Selon un second mode de réalisation, l'étape (a) du procédé selon l'invention de préparation d'une émulsion de gouttes de bitume stabilisée dans une phase aqueuse peut consister à :

- préparer une dispersion colloïdale avec le premier type de particules solides, de préférence de silice, et avec le second type de particules solides, de préférence de silice, dans un milieu aqueux en présence d'au moins un composé tensioactif ;
- chauffer ladite dispersion colloïdale à une température comprise entre 30°C et 95°C ;
- verser le bitume, de préférence chauffé à une température comprise entre 100°C et 180°C, de façon préférée entre 120°C et 160°C, et de façon plus préférée entre 140°C et 160°C, dans la dispersion colloïdale chaude et agiter le mélange pour provoquer l'émulsification.

A l'issue de cette étape (a), on obtient une émulsion de gouttes de bitume stabilisée dans une phase aqueuse. Les particules solides de premier et second type forment une enveloppe autour des gouttes de bitume. Ces gouttes peuvent avoir un diamètre compris entre 1 μm et 1000 μm, de façon préférée entre 1 μm et 500 μm, et de façon plus préférée entre 1 μm et 50 μm. L'émulsion peut avoir une teneur massique en bitume comprise entre 1% et 90% en poids, de façon préférée entre 10% et 80% en poids, et de façon plus préférée entre 50% et 70% en poids.

L'émulsion de gouttes de bitume obtenue à l'issue de cette étape (a) peut soit être directement séchée selon l'étape (c) du procédé selon l'invention, soit subir une étape (b) intermédiaire de transformation par minéralisation de l'enveloppe en une coque.

Selon un premier mode de réalisation, lors de l'étape (b) du procédé selon l'invention, on forme une coque autour des gouttes de bitume obtenues à l'étape (a) par réaction d'un précurseur d'oxyde de silicium en milieu aqueux acide afin d'obtenir des particules formées d'un cœur comprenant du bitume et d'une coque comprenant de l'oxyde de silicium. La coque est, de préférence, une coque essentiellement inorganique d'oxyde de silicium.

Cette étape consiste en une synthèse d'oxyde de silicium par voie sol-gel. Cette voie comprend la préparation d'un sol contenant au moins un précurseur d'oxyde de silicium, l'hydrolyse et la condensation de ces précurseurs sous catalyse acide, puis une étape de maturation aboutissant à la formation d'un gel.

Le précurseur d'oxyde de silicium peut être choisi parmi les alkoxysilanes, de préférence dans le groupe constitué par :

- les tétraalcoxysilanes, par exemple le tétraméthoxysilane (TMOS) et le tétraéthoxysilane (TEOS) ;
- les trialcoxysilanes, par exemple le (3-mercaptopropyl)triméthoxysilane, le (3-aminopropyl)triéthoxysilane, le N-(3-triméthoxysilylpropyl)pyrrole, le 3-(2,4-dinitro-phénylamino)-propyltriéthoxysilane, N-(2-aminoéthyl)-3-aminopropyl-triméthoxysilane, phényltriéthoxysilane et le méthyltriéthoxysilane ;
- les dialcoxysilanes, par exemple le diméthyldiéthoxysilane (DMDES) ;
- et leurs mélanges.

Le précurseur d'oxyde de silicium peut être de façon plus préférée le TEOS.

Lors de cette étape (b), le rapport massique entre le bitume et le ou les précurseurs d'oxyde de silicium peut être compris entre 0,05 et 80, de façon plus préférée entre 0,1 et 40, et de façon encore plus préférée entre 0,4 et 4.

Le milieu aqueux peut être acidifié par ajout d'un acide fort, par exemple de l'acide chlorhydrique. La quantité d'acide ajouté est calculée pour que le pH du milieu soit préférentiellement inférieur ou égal à 5, plus préférentiellement inférieur ou égal à 1.

L'émulsion de gouttes de bitume stabilisée obtenue à l'étape (a) peut être utilisée telle qu'elle directement dans l'étape (b). Il est cependant possible de diluer ou de concentrer cette émulsion pour que la concentration en bitume dans le milieu aqueux soit comprise entre 0,1% et 20% en poids, de préférence entre 1% et 10% en poids, et plus préférentiellement entre 2% et 7% en poids. De plus, selon un mode de réalisation préféré, au moins un composé tensioactif est ajouté dans le milieu aqueux avant la réaction du précurseur d'oxyde de silicium. Le composé tensioactif peut être tel que défini ci-dessus dans l'étape (a). La concentration en composé tensioactif dans le milieu peut être comprise entre 0,1% et 5% en poids, plus préférentiellement entre 0,8% et 2% en poids, par rapport au poids total du milieu aqueux.

La réaction du précurseur d'oxyde de silicium en milieu aqueux acide permet la formation d'un sol qui se transforme en gel par maturation. Pour favoriser l'homogénéité du milieu réactionnel, on applique de préférence une agitation durant l'étape (b). Cette agitation est de préférence douce mais continue. On peut par exemple disposer le milieu réactionnel dans un agitateur rotatif.

Selon un mode de réalisation préféré, l'étape (b) du procédé selon l'invention peut consister à :

- éventuellement diluer dans de l'eau l'émulsion de gouttes de bitume stabilisée obtenue à l'étape (a) pour que la concentration en bitume soit comprise entre 0,1% et 20% en poids, de préférence entre 1% et 10% en poids, et plus préférentiellement entre 2% et 7% en poids ;
- éventuellement ajouter à cette émulsion un composé tensioactif ;
- ajouter un acide fort à l'émulsion pour que le pH de l'émulsion soit inférieur ou égal à 5, de préférence inférieur ou égal à 2 ;
- ajouter au moins un précurseur d'oxyde de silicium à l'émulsion acide ;
- laisser maturer le gel d'oxyde de silicium sous agitation.

A l'issue de cette étape (b), on obtient des particules formées d'un cœur comprenant du bitume et d'une coque essentiellement inorganique, en suspension dans le milieu aqueux.

L'étape (c) du procédé selon l'invention consiste en une étape de séchage jusqu'à l'obtention d'un matériau de bitume solide.

La méthode de séchage peut être choisie parmi les méthodes classiques bien connues de l'homme du métier. Par exemple, le matériau solide peut être récupéré du milieu aqueux par filtration sous vide sur Büchner, puis séchées dans un dessiccateur. Alternativement, le matériau peut être séché à l'air, par lyophilisation ou par séchage par atomisation, communément appelé par le terme anglais « spray-drying ». Avantageusement, le matériau peut être séché par atomisation. Cette technique est avantageuse dans la mesure où elle permet d'atténuer les forces capillaires appliquées, susceptibles de rompre l'enveloppe ou la coque des particules de bitume solide. Cette technique est classiquement utilisée pour obtenir des poudres dans le domaine de l'agroalimentaire, de la pharmacie et de la cosmétique.

Le matériau de bitume solide obtenu ou susceptible d'être obtenu par le procédé décrit ci-dessus est également un objet de la présente invention. Ce matériau est intéressant dans la mesure où il constitue une nouvelle forme solide de bitume. Ce matériau est un matériau de bitume solide comprenant des particules formées d'un cœur comprenant du bitume et d'une enveloppe ou d'une coque, ladite enveloppe ou coque comprenant au moins les premier et second types de particules solides décrites ci-dessus.

On entend par enveloppe, des couches de particules solides entourant au moins partiellement le cœur de bitume, lesdites particules comprenant au moins les deux types de particules solides telles que décrites précédemment, de préférence lesdites particules étant constituées des deux types de particules solides telles que décrites précédemment.

On entend par coque, une couche entourant au moins partiellement le cœur de bitume et comprenant l'enveloppe telle que décrite précédemment et une couche homogène d'oxyde de silicium obtenue par minéralisation selon l'étape (b) du procédé tel que décrit précédemment.

De préférence, on entend par coque, une couche entourant au moins partiellement le cœur de bitume et constituée de l'enveloppe telle que décrite précédemment et d'une couche homogène d'oxyde de silicium obtenue par minéralisation selon l'étape (b) du procédé tel que décrit précédemment.

Il est possible de distinguer un matériau de bitume solide comprenant une enveloppe d'un matériau de bitume solide comprenant une coque du fait de l'aspect particulier distinctif de l'enveloppe (couches de particules) et de la coque (couche homogène) par des méthodes classiques d'analyse connues de l'homme du métier, par exemple par microscopie électronique.

Dans un mode de réalisation particulier ne comprenant pas d'étape intermédiaire (b), on sèche lors de l'étape (c) du procédé selon l'invention directement l'émulsion de gouttes de bitume stabilisée dans une phase aqueuse obtenue à l'étape (a) jusqu'à l'obtention d'un matériau de bitume solide ayant de préférence un taux d'humidité compris entre 10% et 30% en poids, de façon plus préférée compris entre 12% et 25% en poids, et de façon plus encore préférée compris entre 15% et 20% en poids.

La présente invention a également pour objet un matériau de bitume solide comprenant des particules formées d'un cœur comprenant du bitume et d'une enveloppe, ladite enveloppe comprenant au moins deux types de particules solides, un premier type de particules solides ayant un diamètre compris entre 30 nm et 3000 nm, de façon préférée entre 40 nm et 1000 nm, de façon plus préférée entre 40 nm et 500 nm, et de façon encore plus préférée entre 50 nm et 300 nm, et un second type de particules solides ayant un diamètre compris entre 2 nm et 100 nm, de façon préférée entre 2 nm et 50 nm, de façon plus préférée entre 2 nm et 20 nm, et de façon encore plus préférée entre 4 nm et 9 nm, étant entendu que le premier type de particules solides a un diamètre au moins trois fois plus élevé que celui du second type de particules solides, de façon préférée au moins quatre fois plus élevé, et de façon plus préférée au moins six fois plus élevé, le matériau de bitume solide ayant un taux d'humidité comprise entre 10% et 30% en poids. Le taux d'humidité est de façon plus préférée compris entre 12% et 25% en poids, et de façon plus encore préférée compris entre 15% et 20% en poids.

Ce matériau de bitume selon l'invention est de préférence un matériau de type pâteux, qui peut se présenter sous la forme d'une pâte granulaire concentrée pouvant se déliter facilement lors de la manipulation ou par ajout de solvant tel que de l'eau. Selon le taux d'humidité, il peut se présenter sous forme de pâte granulaire concentrée, de gâteau ou de galette. Sa teneur massique en bitume est de préférence comprise entre 50% et 90% en poids, et de façon plus préférée entre 70% et 85% en poids.

On entend par gâteau ou galette, des formes de bitume solide obtenues par des procédés de filtration conventionnels, connus de l'homme du métier et largement décrits dans la littérature, en particulier dans les ouvrages de références tels que « Filters and Filtration Handbook », Ken Sutherland, 5th edition (2008), Elsevier.

Ce matériau de bitume est particulièrement avantageux car il est facilement stockable, dispersable et transportable en système fermé.

Dans un autre mode de réalisation particulier ne comprenant pas d'étape intermédiaire (b), on sèche lors de l'étape (c) du procédé selon l'invention directement l'émulsion de gouttes de bitume stabilisée dans une phase aqueuse obtenue à l'étape (a) par spray-drying jusqu'à l'obtention d'une poudre de bitume.

Les particules qui constituent la poudre de bitume sont de préférence sphériques ou quasi-sphériques et elles ont un diamètre compris de façon préférée entre 1 $\mu$m et 1000 $\mu$m, de façon plus préférée entre 1 $\mu$m et 500 $\mu$m, et de façon encore plus préférée entre 1 $\mu$m et 50 $\mu$m. Ce matériau peut comprendre une teneur en eau résiduelle. En particulier, cette poudre de bitume peut contenir jusqu'à 5% en poids d'eau, de préférence moins de 3% en poids d'eau, plus préférentiellement moins de 1% en poids d'eau.

Dans un mode de réalisation particulier comprenant l'étape intermédiaire (b), on sèche lors de l'étape (c) le matériau obtenu à l'issue de l'étape (b).

La présente invention a également pour objet un matériau de bitume solide comprenant des particules formées d'un cœur comprenant du bitume et d'une coque, ladite coque comprenant au moins deux types de particules solides, un premier type de particules solides ayant un diamètre compris entre 30 nm et 3000 nm, de façon préférée entre 40 nm et 1000 nm, de façon plus préférée entre 40 nm et 500 nm, et de façon encore plus préférée entre 50 nm et 300 nm, et un second type de particules solides ayant un diamètre compris entre 2 nm et 100 nm, de façon préférée entre 2 nm et 50 nm, de façon plus préférée entre 2 nm et 20 nm, et de façon encore plus préférée entre 4 nm et 9 nm, étant entendu que le premier type de particules a un diamètre au moins trois fois plus élevé que celui du second type de particules, de façon préférée au moins quatre fois plus élevé, et de façon plus préférée au moins six fois plus élevé. Ladite coque comprend en outre de préférence de l'oxyde de silicium.

Ce matériau de bitume solide selon l'invention est de préférence une poudre de bitume. Les particules qui le constituent sont de préférence sphériques ou quasi-sphériques et elles ont un diamètre compris de façon préférée entre 1 $\mu$m et 1000 $\mu$m, de façon plus préférée entre 1 $\mu$m et 500 $\mu$m, et de façon encore plus préférée entre 1 $\mu$m et 50 $\mu$m.

Ce matériau peut comprendre une teneur en eau résiduelle. Il peut contenir jusqu'à 5% en poids d'eau, de préférence moins de 3% en poids d'eau, plus préférentiellement moins de 1% en poids d'eau.

Le matériau de bitume solide obtenu ou susceptible d'être obtenu par le procédé selon l'invention est particulièrement avantageux car il présente une stabilité thermique excellente, jusqu'à des températures élevées. On entend par stabilité thermique le fait que le matériau de bitume conserve sa structure solide (poudre ou pâte) et ne colle pas de préférence à une température inférieure à 100°C. Ces propriétés permettent d'envisager un transport de ce bitume dans des sacs, en particulier pour le bitume en poudre.

En outre, les tests ont montré que le matériau de bitume solide selon l'invention pouvait être facilement relargable. Il peut donc être utilisé après son transport de façon classique, sans avoir besoin d'adapter les procédés utilisant ce matériau. Les utilisations de ce bitume peuvent être par exemple dans les domaines des applications routières, notamment dans la fabrication de liants routiers tels que les enrobés à chaud, les enrobés à froid ou les enduits superficiels, et dans les domaines des applications industrielles, par exemple dans la fabrication de revêtements intérieurs et extérieurs.

D'autres buts, caractéristiques et avantages de l'invention apparaîtront des exemples suivants, qui sont donnés à titre purement illustratif et nullement limitatif.

## EXEMPLES

**Exemple 1** : **Préparation d'une émulsion de gouttes de bitume stabilisées en phase aqueuse**

Quatre émulsions de gouttes de bitumes ont été préparées avec les solutions décrites dans le tableau 1 :

Tableau 1

| Solution | Bitume (g) | Masse d'eau (g) | Masse de particules A380 (g) | Masse de particules OX50 (g) | Masse de TTAB (g) |
|---|---|---|---|---|---|
| 1 | 10 | 67,5 | 0,2 | - | 0,015 |
| 2 | 15 | 79 | - | 1 | 0,001 |
| 3 | 42 | 130 | 0,6 | 3,4 | 0,006 |
| 4 | 30 | 194 | 1 | 5 | 0,015 |

• Protocole pour les solutions 1 et 2 :

La dispersion colloïdale de particules dans l'eau a été préparée en mélangeant :

- les particules de silice Aerosil® OX50 - 50 nm (Degussa) ou Aerosil® 380 - 7 nm (Degussa)
- l'eau
- le TTAB

Le mélange a été dispersé à l'aide d'une sonde à ultrasons Bioblock Scientific -Vibra-cell de 500 Watts et de 20 kHz, utilisée pendant 10 minutes à 60% d'amplitude par pulse de 1 seconde avec des intervalles de 1 seconde également.

Cette dispersion a été mise à chauffer à 95°C.

Le bitume a été mis à chauffer à 160°C.

Une fois les températures atteintes, un dispositif d'agitation Ultra-Turrax® T25 (tige S25KV-25F) a été mis en marche à une vitesse de 24 000 tr/min dans la solution colloïdale et le bitume a été versé lentement.

• Protocole pour la solution 3 :

Une dispersion colloïdale de particules dans l'eau a été préparée avec :

- 3,4 g de particules de silice Aerosil® OX50 - 50 nm (Degussa)
- 50 g d'eau
- 0,005 g de TTAB.

Le mélange a été dispersé à l'aide d'une sonde à ultrasons Bioblock Scientific -Vibra-cell de 500 Watts et de 20 kHz, utilisée pendant 10 minutes à 60% d'amplitude par pulse de 1 seconde avec des intervalles de 1 seconde également.

Cette dispersion a été mise à chauffer à 95°C.

42 g de bitume ont été mis à chauffer à 160°C.

Une fois les températures atteintes, un dispositif d'agitation Ultra-Turrax® (tige S25KV-25F) a été mis en marche dans la solution colloïdale et le bitume a été versé lentement, jusqu'à obtention d'une émulsion à 57% massiques en bitume.

Une seconde dispersion colloïdale de particules dans l'eau a été préparée avec :

- 0,6 g de particules de silice Aerosil® A380 - 7 nm (Degussa)
- 80 g d'eau
- 0,001 g de TTAB

Le mélange a été dispersé à l'aide d'une sonde à ultrasons utilisée pendant 10 minutes à 60% d'amplitude par pulse de 1 seconde avec des intervalles de 1 seconde également.

La même quantité d'émulsion à 57% massiques en bitume et de la seconde solution colloïdale ont été mélangées et le flacon est ensuite agité manuellement afin d'homogénéiser la solution.

• Protocole pour la solution 4 :

Une dispersion colloïdale de particules dans l'eau a été préparée avec :

- 5 g de particules de silice Aerosil® OX50 - 50 nm (Degussa)
- 95 g d'eau
- 0,006 g de TTAB.

Le mélange a été dispersé à l'aide d'une sonde à ultrasons Bioblock Scientific -Vibra-cell de 500 Watts et de 20 kHz, utilisée pendant 20 minutes à 40% d'amplitude par pulse de 1 seconde avec des intervalles de 1 seconde également.

Cette dispersion a été mise à chauffer à 95°C.

30 g de bitume ont été mis à chauffer à 160°C.

Une fois les températures atteintes, un dispositif d'agitation Ultra-Turrax® (tige S25KV-25F) a été mis en marche dans la solution colloïdale et le bitume a été versé lentement, jusqu'à obtention d'une émulsion à 29% massiques en matière sèche.

Une seconde dispersion colloïdale de particules dans l'eau a été préparée avec :

- 1 g de particules de silice Aerosil® A380 - 7 nm (Degussa)
- 99 g d'eau
- 0,009 g de TTAB.

Le mélange a été dispersé à l'aide d'une sonde à ultrasons utilisée pendant 20 minutes à 40% d'amplitude par pulse de 1 seconde avec des intervalles de 1 seconde également. L'émulsion à 29% massiques en matière sèche et la seconde solution colloïdale ont été mélangées et le flacon a ensuite été placé sur un dispositif rotatif à faible vitesse afin d'homogénéiser l'émulsion ainsi obtenue à 12% massiques en matière sèche.

• <u>Résultats</u> :

Aucune émulsion n'a été obtenue avec la solution n°1, contrairement à la solution n°2 où une émulsion à 23% massiques en bitume a été obtenue. Toutefois au bout de deux semaines de stockage, l'émulsion agitée colle aux parois du flacon signe d'un recouvrement hétérogène de l'interface bitume.

Pour les solutions n°3 et n°4, l'utilisation de particules bimodales a permis d'obtenir une émulsion non collante pendant plusieurs semaines.

De façon tout à fait surprenante, l'utilisation de particules bimodales permet de stabiliser l'émulsion de bitume.

**Exemple 2** : **Préparation d'un matériau de bitume solide sous forme de poudre**

• Séchage par lyophilisation :

Une émulsion a été préparée selon le protocole décrit pour la solution 3 de l'exemple 1.

4 g de cette émulsion diluée à 6% massiques en bitume et 3 g d'eau ont été placés dans un tube qui lui-même a été placé sur un dispositif rotatif. Sous une agitation de 20 tr/min, ont été ajoutés 0,04 g de TTAB et 1 mL de HCl à 37% volumique. Le pH de la solution était d'environ 0,2. Puis 0,5 g de TEOS ont été ajoutés. L'agitation a été maintenue pendant 12 heures.

Les émulsions minéralisées ont été lyophilisées.

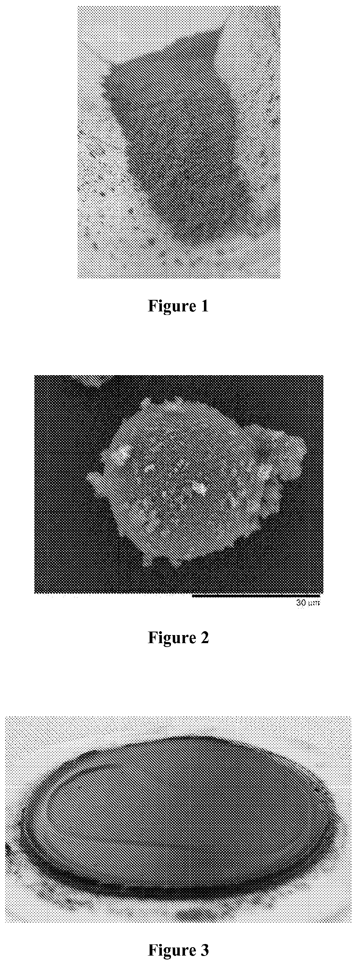

Le matériau final obtenu se présentait sous la forme d'une poudre (montrée sur la **figure 1**) constituée de particules dont une image par microscopie électronique à balayage est montrée sur la **figure 2.**

Il est tout à fait surprenant pour un homme du métier de constater que l'oxyde de silicium, de nature hydrophile, mouille le bitume hydrophobe dans les endroits non couverts par les particules, pour conduire finalement à la minéralisation complète de la surface

• Séchage par « spray-drying » :

Une émulsion a été préparée selon le protocole décrit pour la solution 4 de l'exemple 1.

23,5 g de cette émulsion à 12% massiques en matière sèche, 8 g d'eau et 32 g de HCl à 37% volumique ont été placés dans un tricorne, puis 1,58 g de TEOS ont été ajoutés au goutte à goutte sous agitation manuelle. La solution ainsi obtenue est agitée pendant quelques minutes afin que l'éthanol formé lors de la minéralisation s'évapore. La solution est ensuite transvasée dans un flacon, puis agitée pendant 24 heures à l'aide d'un dispositif rotatif. 35 g de HCl à 37% volumique et 1,5 g de TEOS ont été rajoutés à la solution précédente. L'agitation est poursuivie pendant 24 heures. La solution a ensuite été lavée à l'eau par centrifugation jusqu'à l'obtention d'un pH compris entre 5 et 6. On obtient une émulsion de bitume minéralisée à 7% massiques en matière sèche.

L'émulsion minéralisée a été séchée par un appareil de « spray-drying » commercialisé sous le nom 4M8-TriX par la société ProCepT.

L'émulsion est pompée de manière à atteindre la buse bi-fluide munie d'un orifice de 0,8 mm, puis pulvérisée en fines gouttelettes, dans une enceinte cylindrique verticale au contact d'un courant d'air chaud à 140°C afin d'évaporer l'eau. La poudre ainsi obtenue est ensuite entrainée par le flux de chaleur jusqu'à un cyclone qui sépare les particules de poudre du flux d'air.

Le matériau final obtenu se présente sous la forme d'une poudre dont la teneur en eau est inférieure à 2% massique. La poudre possède de bonnes propriétés d'écoulement et ne colle pas.

**Exemple 3 : Préparation d'un matériau de bitume solide sous forme de pâte granulaire**

Une émulsion a été préparée selon le protocole décrit pour la solution 3 de l'exemple 1.

Cette émulsion a été filtrée sous vide sur Büchner. Une pâte granulaire a été récupérée sur le papier filtre (voir **figure 3**). Ce matériau présentait une consistance pâteuse. Son taux d'humidité était de 20% en poids.

Les inventeurs ont constaté que, si le taux d'humidité de la pâte granulaire était inférieur à 10%, le matériau avait rapidement un aspect collant. Les inventeurs pensent que cela est dû à la rupture de l'enveloppe recouvrant le bitume. Au contraire, quand le taux d'humidité de la pâte granulaire était supérieur à 30%, on obtient une émulsion et non un matériau solide.

Malgré une filtration complète sur Büchner, la pâte granulaire de bitume obtenue possède étonnamment de l'eau rémanente interstitielle de disjonction. Il semble que, de façon surprenante pour l'homme du métier, cette eau rémanente inhibe la coalescence des gouttes de bitume et facilite la délitation de ladite pâte granulaire.

**Exemple 4** : **Test de remise en émulsion**

La pâte granulaire obtenue dans l'exemple 3 n'est pas collante. Sans vouloir toutefois être liés par cette théorie, les inventeurs pensent que le fait que la pâte ne soit pas collante suggère que l'enveloppe recouvre entièrement les gouttes de bitume.

Un échantillon de cette pâte granulaire a été remis en émulsion en ajoutant de l'eau. On a constaté que le bitume se mettait instantanément sous forme d'une dispersion après agitation et qu'il ne collait pas aux parois du récipient.

Ce test permet de montrer que l'enveloppe entourant le bitume n'a pas été rompue lors de la remise en émulsion du matériau dans l'eau et est donc stable.

**Exemple 5** : **Test stabilité thermique sur la poudre de bitume**

Un échantillon de poudre obtenu selon l'exemple 2 mis dans une coupelle en aluminium a été placé dans une étuve. La température a été programmée de 35°C à 100°C en augmentant tous les jours de 5°C.

A la fin de la montée en température, la poudre n'était pas déstabilisée et le bitume était toujours protégé par sa coque. La poudre peut donc résister à des températures allant jusqu'à 100°C.

**Exemple 6** : **Test de relargage du bitume**

Afin d'évaluer la capacité de relargage du matériau de bitume en poudre selon l'invention, des essais de fabrication d'un enrobé bitumineux ont été menés.

1 kg de granulats ont été chauffés à 160°C et placés dans un malaxeur. Puis, 42 g de bitume en poudre obtenu selon l'exemple 2, préalablement chauffés à 160°C, ont été versés sur les granulats. Après 3 minutes de malaxage, le bitume est venu enrober les granulats qui sont devenus brillants et collants.

**Revendications**

1. Procédé d'obtention d'un matériau de bitume solide, ce procédé comprenant les étapes consistant à :

   a) préparer une émulsion de gouttes de bitume dans une phase aqueuse, ladite émulsion étant stabilisée par un mélange d'au moins deux types de particules solides, un premier type de particules solides ayant un diamètre compris entre 30 nm et 3000 nm, et un second type de particules solides ayant un diamètre compris entre 2 nm et 100 nm, étant entendu que le premier type de particules solides a un diamètre au moins trois fois plus élevé que celui du second type de particules solides;
   b) éventuellement, former une coque autour des gouttes de bitume obtenues à l'étape (a) par réaction d'un précurseur d'oxyde de silicium en milieu aqueux acide ;
   c) sécher jusqu'à l'obtention d'un matériau de bitume solide.

2. Procédé selon la revendication 1, **caractérisé en ce que** le matériau de bitume solide est une poudre de bitume.

3. Procédé selon la revendication 2, **caractérisé en ce que** la poudre de bitume contient jusqu'à 5% en poids d'eau, de préférence moins de 3% en poids d'eau, plus préférentiellement moins de 1% en poids d'eau.

4. Procédé selon l'une quelconque des revendications 1 à 3, **caractérisé en ce que** les premiers et seconds types de particules solides sont des particules de silice.

5. Procédé selon l'une quelconque des revendications 1 à 4, **caractérisé en ce que** :

   - la quantité totale de particules solides du premier type est comprise entre 0,09% et 15% en poids, plus préférentiellement entre 1,5% et 7% en poids, et encore plus préférentiellement entre 3,5% et 5% en poids, par rapport au poids total de l'émulsion obtenue ;
   - la quantité totale de particules solides du second type est comprise entre 0,01% et 5% en poids, plus préférentiellement entre 0,5% et 4% en poids, et encore plus préférentiellement entre 1% et 3% en poids, par rapport au poids total de l'émulsion obtenue ;
   - et le rapport massique entre le premier type de particules solides et le second type de particules solides est compris entre 1 et 15, plus préférentiellement entre 2 et 10, et encore plus préférentiellement entre 3 et 6.

6. Procédé selon l'une quelconque des revendications 1 à 5, **caractérisé en ce que** les premiers et/ou seconds types de particules solides sont fonctionnalisées par des composés tensioactifs adsorbés à leur surface, de préférence des composés tensioactifs cationiques ou anioniques comprenant au moins une chaîne alkyle en $C_{12}$ à $C_{32}$, plus préférentiellement en $C_{16}$ à $C_{20}$, et encore plus préférentiellement en $C_{18}$.

7. Matériau de bitume solide susceptible d'être obtenu par le procédé selon l'une quelconque des revendications 1 à 6.

8. Matériau de bitume solide constitué de particules formées d'un cœur comprenant du bitume et d'une enveloppe ou d'une coque, ladite enveloppe ou coque comprenant au moins deux types de particules solides, un premier type de particules solides ayant un diamètre compris entre 30 nm et 3000 nm, et un second type de particules solides ayant un diamètre compris entre 2 nm et 100 nm, étant entendu que le premier type de particules a un diamètre au moins trois fois plus élevé que celui du second type de particules.

9. Matériau de bitume solide selon la revendication 8, **caractérisé en ce qu'**il comprend des particules formées d'un cœur comprenant du bitume et d'une coque, ladite coque comprenant de l'oxyde de silicium.

10. Matériau de bitume solide selon l'une quelconque des revendications 7 à 9, **caractérisé en ce qu'**il s'agit d'une poudre de bitume dont les particules ont un diamètre compris entre 1 $\mu$m et 1000 $\mu$m, de façon plus préférée entre 1 $\mu$m et 500 $\mu$m, et de façon encore plus préférée entre 1 $\mu$m et 50 $\mu$m.

11. Matériau selon la revendication 10, **caractérisé en ce que** la poudre de bitume contient jusqu'à 5% en poids d'eau, de préférence moins de 3% en poids d'eau, plus préférentiellement moins de 1% en poids d'eau.

12. Matériau de bitume solide selon la revendication 8, **caractérisé en ce qu'**il comprend des particules formées d'un cœur comprenant du bitume et d'une enveloppe, et **en ce que** le matériau de bitume solide a un taux d'humidité compris entre 10% et 30% en poids, de façon plus préférée compris entre 12% et 25% en poids, et de façon plus encore préférée compris entre 15% et 20% en poids.

13. Matériau de bitume solide selon la revendication 12, **caractérisé en ce qu'**il se présente sous la forme de pâte granulaire concentrée, de gâteau ou de galette.

14. Matériau de bitume solide selon l'une des revendications 12 et 13, **caractérisé en ce que** sa teneur massique en bitume est comprise entre 50% et 90% en poids, et de façon plus préférée entre 70% et 85% en poids.

**Patentansprüche**

1. Verfahren zum Erhalt eines festen Bitumenmaterials, wobei dieses Verfahren die folgenden Schritte umfasst:

   a) Herstellen einer Emulsion von Bitumentropfen in einer wässrigen Phase, wobei die Emulsion durch eine Mischung von mindestens zwei Typen von festen Teilchen stabilisiert wird, wobei ein erster Typ von festen Teilchen einen Durchmesser zwischen 30 nm und 3000 nm aufweist und ein zweiter Typ von festen Teilchen einen Durchmesser zwischen 2 nm und 100 nm aufweist, mit der Maßgabe, dass der erste Typ von festen Teilchen einen mindestens dreimal so großen Durchmesser aufweist wie der zweite Typ von festen Teilchen;
   b) gegebenenfalls Bilden einer Schale um die in Schritt (a) erhaltenen Bitumentropfen durch Reaktion eines Siliciumoxid-Vorläufers in saurem wässrigem Medium;
   c) Trocknen bis zum Erhalt eines festen Bitumenmaterials.

2. Verfahren nach Anspruch 1, **dadurch gekennzeichnet, dass** es sich bei dem festen Bitumenmaterial um ein Bitumenpulver handelt.

3. Verfahren nach Anspruch 2, **dadurch gekennzeichnet, dass** das Bitumenpulver bis zu 5 Gew.-% Wasser, vorzugsweise weniger als 3 Gew.-% Wasser, weiter bevorzugt weniger als 1 Gew.-% Wasser, enthält.

4. Verfahren nach einem der Ansprüche 1 bis 3, **dadurch gekennzeichnet, dass** es sich bei dem ersten und zweiten Typ von festen Teilchen um Siliciumdioxidteilchen handelt.

5. Verfahren nach einem der Ansprüche 1 bis 4, **dadurch gekennzeichnet, dass**:

   - die Gesamtmenge an festen Teilchen des ersten Typs zwischen 0,09 und 15 Gew.-%, weiter bevorzugt zwischen 1,5 und 7 Gew.-% und noch weiter bevorzugt zwischen 3,5 von 5 Gew.-%, bezogen auf das Gesamtgewicht der erhaltenen Emulsion, liegt;
   - die Gesamtmenge an festen Teilchen des zweiten Typs zwischen 0,01 und 5 Gew.-%, weiter bevorzugt zwischen 0,5 und 4 Gew.-% noch weiter bevorzugt zwischen 1 und 3 Gew.-%, bezogen auf das Gesamtgewicht der erhaltenen Emulsion, liegt;
   - und das Massenverhältnis zwischen dem ersten Typ von festen Teilchen und dem zweiten Typ von festen Teilchen zwischen 1 und 15, weiter bevorzugt zwischen 2 und 10 und noch weiter bevorzugt zwischen 3 und 6 liegt.

6. Verfahren nach einem der Ansprüche 1 bis 5, **dadurch gekennzeichnet, dass** der erste und/oder zweite Typ von festen Teilchen durch an ihrer Oberfläche absorbierte Tenside, vorzugsweise kationische oder anionische Tenside mit einer $C_{12}$- bis $C_{32}$-, weiter bevorzugt $C_{16}$- bis $C_{20}$- und noch weiter bevorzugt $C_{18}$-Alkylkette, funktionalisiert ist bzw. sind.

7. Festes Bitumenmaterial, das durch das Verfahren nach einem der Ansprüche 1 bis 6 erhältlich ist.

8. Festes Bitumenmaterial, bestehend aus Teilchen aus einem Kern, der Bitumen umfasst, und einer Hülle oder einer Schale, wobei die Hülle oder Schale mindestens zwei Typen von festen Teilchen umfasst, wobei ein erster Typ von festen Teilchen einen Durchmesser zwischen 30 nm und 3000 nm aufweist und ein zweiter Typ von festen Teilchen einen Durchmesser zwischen 2 nm und 100 nm aufweist, mit der Maßgabe, dass der erste Typ von festen Teilchen einen mindestens dreimal so großen Durchmesser aufweist wie der zweite Typ von festen Teilchen.

9. Festes Bitumenmaterial nach Anspruch 8, **dadurch gekennzeichnet, dass** es Teilchen aus einem Kern, der Bitumen umfasst, und eine Schale umfasst, wobei die Schale Siliciumoxid umfasst.

10. Festes Bitumenmaterial nach einem der Ansprüche 7 bis 9, **dadurch gekennzeichnet, dass** es sich um ein Bitumenpulver handelt, dessen Teilchen einen Durchmesser zwischen 1 $\mu$m und 1000 $\mu$m, weiter bevorzugt zwischen 1 $\mu$m und 500 $\mu$m und noch weiter bevorzugt zwischen 1 $\mu$m und 50 $\mu$m aufweisen.

11. Material nach Anspruch 10, **dadurch gekennzeichnet, dass** das Bitumenpulver bis zu 5 Gew.-% Wasser, vorzugsweise weniger als 3 Gew.-% Wasser, weiter bevorzugt weniger als 1 Gew.-% Wasser, enthält.

12. Festes Bitumenmaterial nach Anspruch 8, **dadurch gekennzeichnet, dass** es Teilchen aus einem Kern, der Bitumen umfasst, und einer Hülle umfasst und dass das feste Bitumenmaterial einen Feuchtigkeitsgehalt zwischen 10 und 30 Gew.-%, weiter bevorzugt zwischen 12 und 25 Gew.-%, noch weiter bevorzugt zwischen 15 und 20 Gew.-%, aufweist.

13. Festes Bitumenmaterial nach Anspruch 12, **dadurch gekennzeichnet, dass** es in Form einer konzentrierten Granulatpaste, eines Kuchens oder einer Scheibe vorliegt.

14. Festes Bitumenmaterial nach einem der Ansprüche 12 und 13, **dadurch gekennzeichnet, dass** sein Massengehalt an Bitumen zwischen 50 und 90 Gew.-% und weiter bevorzugt zwischen 70 und 85 Gew.-% liegt.

**Claims**

1. Process for obtaining a solid bitumen material, this process comprising the steps consisting in:

    a) preparing an emulsion of drops of bitumen in an aqueous phase, said emulsion being stabilized with a mixture of at least two types of solid particles, a first type of solid particles with a diameter of between 30 nm and 3000 nm, and a second type of solid particles with a diameter of between 2 nm and 100 nm, it being understood that the first type of solid particles has a diameter at least three times greater than that of the second type of solid particles;
    b) optionally, forming a shell around the drops of bitumen obtained in step (a) by reaction of a silicon oxide precursor in acidic aqueous medium;
    c) drying until a solid bitumen material is obtained.

2. Process according to Claim 1, **characterized in that** the solid bitumen material is a bitumen powder.

3. Process according to Claim 2, **characterized in that** the bitumen powder contains up to 5% by weight of water, preferably less than 3% by weight of water, more preferentially less than 1% by weight of water.

4. Process according to any one of Claims 1 to 3, **characterized in that** the first and second types of solid particles are silica particles.

5. Process according to any one of Claims 1 to 4, **characterized in that**:

- the total amount of solid particles of the first type is between 0.09% and 15% by weight, more preferentially between 1.5% and 7% by weight and even more preferentially between 3.5% and 5% by weight relative to the total weight of the emulsion obtained;
- the total amount of solid particles of the second type is between 0.01% and 5% by weight, more preferentially between 0.5% and 4% by weight and even more preferentially between 1% and 3% by weight relative to the total weight of the emulsion obtained;
- and the mass ratio between the first type of solid particles and the second type of solid particles is between 1 and 15, more preferentially between 2 and 10 and even more preferentially between 3 and 6.

6. Process according to any one of Claims 1 to 5, **characterized in that** the first and/or second types of solid particles are functionalized with surfactant compounds adsorbed onto their surface, preferably cationic or anionic surfactant compounds comprising at least one $C_{12}$ to $C_{32}$, more preferentially $C_{16}$ to $C_{20}$ and even more preferentially $C_{18}$ alkyl chain.

7. Solid bitumen material which may be obtained via the process according to any one of Claims 1 to 6.

8. Solid bitumen material consisting of particles formed from a core comprising bitumen and from an envelope or shell, said envelope or shell comprising at least two types of solid particles, a first type of solid particles with a diameter of between 30 nm and 3000 nm, and a second type of solid particles with a diameter of between 2 nm and 100 nm, it being understood that the first type of particles has a diameter at least three times greater than that of the second type of particles.

9. Solid bitumen material according to Claim 8, **characterized in that** it comprises particles formed from a core comprising bitumen and from a shell, said shell comprising silicon oxide.

10. Solid bitumen material according to any one of Claims 7 to 9, **characterized in that** it is a bitumen powder, the particles of which have a diameter of between 1 $\mu$m and 1000 $\mu$m, more preferably between 1 $\mu$m and 500 $\mu$m and even more preferably between 1 $\mu$m and 50 $\mu$m.

11. Material according to Claim 10, **characterized in that** the bitumen powder contains up to 5% by weight of water, preferably less than 3% by weight of water, more preferentially less than 1% by weight of water.

12. Solid bitumen material according to Claim 8, **characterized in that** it comprises particles formed from a core comprising bitumen and from an envelope, and **in that** the solid bitumen material has a moisture content of between 10% and 30% by weight, more preferably between 12% and 25% by weight and even more preferably between 15% and 20% by weight.

13. Solid bitumen material according to Claim 12, **characterized in that** it is in the form of a concentrated granular paste, a cake or a slab.

14. Solid bitumen material according to either of Claims 12 and 13, **characterized in that** its mass content of bitumen is between 50% and 90% by weight and more preferably between 70% and 85% by weight.

**Figure 1**

**Figure 2**

**Figure 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5637350 A **[0004]**
- US 8404164 B **[0004]**
- US 20120128747 A **[0007]**
- FR 2852964 **[0022]**

**Littérature non-brevet citée dans la description**

- **D. FENNELL EVANS ; HÂKAN WENNERSTRÖM.** The Colloidal Domain: Where Physics, Chemistry, Biology, and Technology Meet **[0038]**
- **KEN SUTHERLAND.** Filters and Filtration Handbook. Elsevier, 2008 **[0066]**